# EUROPÄISCHE PATENTANMELDUNG

(11) **EP 2 556 955 A1**
(43) Veröffentlichungstag der Anmeldung: **13.02.2013**
(21) Anmeldenummer: 12178006.8
(22) Anmeldetag: 26.07.2012
(51) Int. Cl.: B32B 11/04, B32B 27/20, B32B 27/32, E04D 5/10

(54) **Bitumenölbarriere**

(30) Priorität: 09.08.2011 DE 102011080674
(71) Anmelder: Orbita-Film GmbH, 06369 Weissandt-Gölzau (DE)
(72) Erfinder: Weyhe, Gottfried, 06217 Merseburg (DE); Krüger, Norbert, 06193 Wettin-Löbejün OT Merbitz (DE); Nase, Michael, 06110 Halle (DE)
(74) Vertreter: Wablat Lange Karthaus

(57) **Zusammenfassung**

Die Erfindung betrifft einen Folienverbund (1) mit wenigstens drei Folienschichten (2), (3) und (4), wobei die zwei äußeren Schichten (2) und (4) jeweils mindestens ein Polyolefinpolymer aufweisen, welches gleich oder verschieden ist. Der Folienverbund ist dadurch gekennzeichnet, dass die mittlere Schicht (3) mindestens ein Polymer, welches kein Polyamid ist und zu den olyolefinpolymeren der Schichten (2) und (4) zumindest teilverträglich ist und darin enthaltenen mindestens einen anorganischen Füllstoff aufweist, welcher ausgewählt ist aus Talkum und Kreide sowie Mischungen von Talkum und Kreide. Ebenso betrifft die Erfindung die Verwendung dieses Folienverbundes (1) als Trägermaterial und/oder Releasefolie für bituminöse Materialien (6).

## Beschreibung

Die vorliegende Erfindung betrifft einen Folienverbund mit wenigstens drei Folienschichten und dessen Verwendung als Trägermaterial und/oder Releasefolie für bituminöse Materialien.

Folienverbunde sind weit verbreitet und mannigfaltig ausgeprägt. Sie werden für die verschiedensten Zwecke, beispielsweise als Releasefolie, eingesetzt. Releasefolien dienen dem Schutz der Materialien auf welche sie aufgebracht werden. Beispielsweise werden sie auf andere Materialien aufgebracht, welche in einem gefalteten oder gerollten Zustand gelagert und transportiert werden und welche ohne Releaseschicht verkleben würden. Eine solche Releaseschicht lässt sich, sobald sie ihren Zweck erfüllt hat, relativ leicht wieder vom zu schützenden Material entfernen. Neben dem Schutz vor Verkleben dienen sie oftmals auch dem Schutz des Materials selbst, d.h. sie verhindern den Zutritt schädlicher Außeneinflüsse in das Material oder dass Austreten von Komponenten aus dem Material.

Releasefolien werden im Stand der Technik beispielsweise genutzt, um eine Barriere gegen Umwelteinflüsse wie Sauerstoff oder UV-Strahlung darzustellen. Weiterhin dienen sie oftmals als Barriere, um Stoffe zurückzuhalten. Beispielsweise wird im Hochbau oft Bitumen zum Schutz von Gebäudeteilen gegen Wasser verwendet. Dabei kommen unter anderem Bitumendachbahnen als Dachabdichtung zur Anwendung. Hierbei gibt es Bitumenbahnen (Trägereinlagen mit beidseitigen Bitumen-Deckschichten) oder Polymerbitumenbahnen (Elastomer-(PYE) und Plastomer-(PYP) Bitumenbahnen). Bitumen besteht hauptsächlich aus hochmolekularen Kohlenwasserstoffen und neigt dazu, so genannte Bitumen-Öle austreten zu lassen. Ist Bitumen dauerhaft der Witterung ausgesetzt, wird es aufgrund von Oxidationsvorgängen spröde und rissig. Releasefolien dienen daher dazu, Bestandteile wie Öle in bitumenhaltigen Materialien zurückzuhalten, so dass diese nicht durch Diffusion aus dem bitumenhaltigen Material austreten können. Auf diesem Weg wird ein Austrocknen des bitumenhaltigen Materials vermieden, so dass die Klebkraft sowie die Biegsamkeit des Materials bewahrt werden.

Bekannte Releasefolien sind beispielsweise in EP 1 408 096 B1 und EP 407 878 B1 offenbart. Die dort beschriebenen Folienverbunde weisen mindestens zwei Folienschichten auf und werden als Releasefolien für ölhaltige Bahnen eingesetzt. Für die Barrierewirkung gegen den Austritt von Ölen muss entweder eine zusätzliche Folienschicht vorhanden sein oder mindestens eine der Folienschichten muss selbst als Barriere gegen Öle ausgebildet sein. Dies bedeutet, dass die letztgenannte Folienschicht aus einem geeigneten Kunststoff bestehen muss, welcher Barriereeigenschaften gegenüber Ölen aufweist, womit nur Materialien wie Polyamid verwendet werden können. Polyamid als polarer Kunststoff weist aufgrund der polaren Eigenschaften gute Barrierewirkung gegenüber Ölen auf. Dies wird auch beispielsweise in der EP 1 407 878 B1 deutlich, da der einzige konkret genannte Folienverbund mit nur zwei Schichten eine Polypropylen-Polyamid-Coexfolie ist. Sofern eine zusätzliche Folienschicht zusätzlich zu den beiden mindesterforderlichen Schichten eingebracht wird, muss diese entweder ein Lack sein oder wieder aus einem geeigneten Material, d.h. Polyamid, bestehen, um Barriereeigenschaften verwirklichen zu können.

Obwohl beispielsweise die EP 1 407 878 B1 einen Aufbau mit nur sehr wenigen Schichten beschreibt, sind in der Praxis zumeist mindestens fünf Schichten erforderlich, um eine ausreichende Barrierewirkung gegen bituminöse Öle zu erzielen. Im oben beschriebenen Fall mit Polyproplyen (PP) und Polyamid (PA) muss sich die PP-Schicht auf der Außenseite befinden. Im Falle reiner Homopolymere von PA und PP ist deren Haftung zueinander so gering, dass ein zusätzlicher Haftvermittler erforderlich wird, d.h. mindestens eine weitere Schicht eingebracht werden muss. Bei Einsatz von copolymerem PA wird zwar die Haftung besser, im Gegenzug wird aber auch die Barrierewirkung des PAs herabgesetzt. Sofern für die Verbesserung der Haftung ein copolymeres PP genutzt wird, ergeben sich Schwierigkeiten bei der ebenfalls notwendigen Silikonisierung. Insgesamt sind mindestens fünf Schichten in der Praxis erforderlich, um eine Folie mit genügend guter Barrierewirkung, insbesondere gegenüber Bitumen-Ölen, bereitstellen zu können.

Die Aufgabe der vorliegenden Erfindung war es daher, Folienverbünde bereitzustellen, welche die oben genannten Nachteile überwinden. Insbesondere sollte eine Folie bereitgestellt werden, welche weniger als fünf Schichten erfordert, aber eine ausreichend hohe Barrierefunktion gewährleistet.

Diese Aufgabe wird durch einen Folienverbund gemäß Anspruch 1 gelöst, sowie durch dessen Verwendung gemäß Anspruch 11. Weitere bevorzugte Ausführungsformen sind in den abhängigen Ansprüchen ausgeführt.

In anderen Worten wird die Aufgabe durch einen Folienverbund mit wenigstens drei Folienschichten gelöst, wobei die zwei äußeren Schichten jeweils mindestens ein Polyolefinpolymer aufweisen, welches gleich oder verschieden ist, wobei die mittlere Schicht mindestens ein Polymer, welches kein Polyamid ist und zu den Polyolefinpolymeren der äußeren Schichten zumindest teilverträglich ist und darin enthaltenen mindestens einen anorganischen Füllstoff aufweist, welcher ausgewählt ist aus Talkum und Kreide sowie Mischungen von Talkum und Kreide. Polyolefine sind Polymere, die aus Alkenen, vorzugsweise C₂-C₈-Olefinen, besonders bevorzugt C₂-C₄-Olefinen wie Ethylen, Propylen, 1-Buten oder Isobuten, durch Polymerisation hergestellt worden sind. Höchst bevorzugt sind Polypropylen und Polyethylen, wobei Polypropylen am höchsten bevorzugt ist.

Der mindestens eine anorganische Füllstoff weist vorzugsweise eine mittlere Teilchengröße von 1-6 µm [D50] und/oder einen Top-cut von 1-12 µm [D98] auf. "Kreide" umfasst Kalk (Calciumcarbonat) und Gips (Calciumsulfat x 2 H₂O). "Talkum" steht für Silikate, wobei die Teilchengrößen und/oder der Top-cut wie eben beschrieben sind, welche ausgewählt sind aus pulverisiertem Talk (Magnesiumsilikathydrat) und Schichtsilikaten, insbesondere Montmorillonit. Vorzugsweise bedeutet Talkum daher pulverisierten Talk (Magnesiumsilikathydrat) und Montmorillonit. Besonders bevorzugt ist Talkum pulverisierter Talk (Magnesiumsilikathydrat).

Unter Verträglichkeit wird die Mischbarkeit auf molekularer Ebene verstanden. Ein Polymeres gilt mit einem anderen als verträglich, wenn im festen Zustand die Moleküle beider Polymeren statistisch verteilt sind, d.h. die Konzentration eines Polymeren entlang eines beliebigen Vektors weder zu- noch abnimmt. Umgekehrt gilt als unverträglich, wenn sich im festen Zustand zwei Phasen ausbilden, die durch eine scharfe Phasengrenze voneinander getrennt sind. Entlang eines die Phasengrenzfläche schneidenden Vektors nimmt die Konzentration des einen Polymeren schlagartig von null auf 100 % zu und die des anderen von 100 % auf null ab. Zwischen beiden Extremen gibt es fließende Übergänge. Sie sind dadurch gekennzeichnet, dass sich zwar eine Phasengrenze ausbildet, diese jedoch unscharf ist. An der Grenzfläche findet eine gegenseitige partielle Durchdringung der beiden Phasen statt. Die Konzentration des einen Polymeren nimmt demnach entlang eines die Phasengrenze schneidenden Vektors mehr oder weniger schnell von null auf 100 % zu und die des anderen Polymeren mehr oder weniger schnell von 100 % auf null ab.

In diesem letzten Fall spricht man auch von Teilverträglichkeit, wie sie in technisch wichtigen Polymeren häufig auftritt. Beispiele für teilverträgliche Polymere sind die Paare Polymethylmethacrylat/Copolymeres aus Styrol und Acrylnitril, Polymethylmethacrylat/Polyvinylchlorid und Polyvinylchlorid/Copolymeres aus Styrol und Acrylnitril sowie das dreiphasige System Polycarbonat/Polybutadien/Copolymeres aus Styrol und Acrylnitril (= Polycarbonat/ABS). Näheres zum Begriff der Verträglichkeit von Polymeren und insbesondere dem sogenannten Löslichkeitsparameter als quantitativem Maß ist beispielsweise dem Polymer Handbook, Hrg. J. Brandrup und E.H. Immergut, 3. Aufl, Wiley, New York 1989, S. VII/519-VII/550 zu entnehmen.

Es konnte überraschenderweise gezeigt werden, dass der oben genannte anorganische Füllstoff bei Einbringung in den passenden Kunststoff dem Folienverbund eine sehr gute Barrierewirkung gegen bituminöse Öle verleiht, welche dauerhaft wirksam ist.

Der Folienverbund ist insbesondere dadurch gekennzeichnet, dass die mittlere Schicht den mindestens einen anorganischen Füllstoff zu 5 bis 90 Masse-% enthält. Vorzugsweise sind 10 bis 70 Masse-%, höchst bevorzugt 10-25 Masse-% enthalten.

Generell addieren sich alle vor- oder nachstehend angegebenen Masse%-Werte immer zu 100 Masse-%.

Die mittlere Schicht des Folienverbundes kann den mindestens einen anorganischen Füllstoff als Batch mit einem weiteren Polymer, welches kein Polyamid ist, als Träger enthalten, wobei das Batch 5 bis 90 Masse-% anorganischen Füllstoff und 95 bis 10 Masse-% des weiteren Polymers aufweist und die mittlere Schicht den Batch zu 5,5 bis 100 Masse-% enthält.

Das Polymer der mittleren Schicht ist vorzugsweise Polyethylen. Besonders bevorzugt wird hier lineares Polyethylen geringer Dichte (PE-LLD oder LLDPE) eingesetzt, dessen Polymermolekül nur kurze Verzweigungen aufweist. Diese Verzweigungen basieren auf einer Copolymerisation von Ethen und höheren C₃-C₁₈-α-Olefinen, vorzugsweise C₄-C₈- α-Olefinen (typischerweise Buten, Hexen oder Octen). Der Gehalt an α-Olefin beträgt vorzugsweise 5 - 12 Masse-%. Höchst bevorzugt ist PE-LLD mit C6-Seitenketten.

Im Folienverbund macht die Dicke der mittleren Schicht vorzugsweise 20-80%, besonders bevorzugt 30-70%, der Gesamtdicke des Folienverbundes aus.

In bevorzugten Ausführungsformen enthalten die mittlere Schichten und/oder mindestens eine der äußeren Schichten bis zu 20 Masse-% an zusätzlichen Additiven, welche gleich oder verschieden sind. Diese zusätzlichen Additive sind beispielsweise ausgewählt aus Farbmitteln, Anti-Schmelzbruchadditiven und Antioxidantien.

Das Polyolefinpolymer der äußeren Schichten, welches gleich oder verschieden ist, ist vorzugsweise ein Propylenpolymer, höchst bevorzugt ein Polypropylen-homopolymer oder - copolymer. Vorzugsweise handelt es sich um Copolymere von Propylen und Ethylen. Besonders bevorzugt ist ein Propylen-Ethylen-Copolymer, welches Antioxidantien, insbesondere phenolische Antioxidantien, zu mindestens einem ppm, vorzugsweise 100-5.000 ppm, höchst bevorzugt 2.000 ppm, aufweist. Phosphitische Antioxidanten sind in der bevorzugten Ausführungsform explizit nicht vorhanden. Eine andere bevorzugte Ausführungsform des Polyolefinpolymers sind Polyethylene, welche für die äußeren Schichten ebenfalls gleich oder verschieden sind. Bezüglich der Antioxidantien gilt auch bei Polyethylenen das Gleiche wie bei den Polypropylenen.

In bevorzugten Ausführungsformen kann eine der äußeren Schichten zusätzlich ein Antihaftmittel enthalten oder auf der nach außen gewandten Seite (des Folienverbundes) eine Antihaftmittelschicht aufweisen. Als Antihaftmittel sind Silikon(e) und Silikonderivate bevorzugt.

Überraschenderweise ergibt sich insbesondere bei der Verwendung eines oben beschriebenen Propylen-Ethylen-Copolymers, welches keine phosphitischen Antioxidantien, sondern nur phenolische Antioxidantien zu 100-5.000 ppm, insbesondere 2.000 ppm aufweist, eine sehr gute Affinität zu einem vorhandenen Antihaftmittel, insbesondere zu einem Silikon bzw. Silikonderivat. Als phenolisches Antioxidants ist beispielsweise Pentaerythritol-Tetrakis(3-(3,5-di-tert-butyl-4-hydroxyphenyl)propionat (Irganox® 1010) zu nennen. Ohne Bindung an diese Theorie wird angenommen, dass das Weglassen der phosphitischen Antioxidantien die sehr gute Affinität zum Antihaftmittel bedingt.

Insgesamt weist der erfindungsgemäße Folienverbund bereits bei drei Schichten eine sehr gute Barrierewirkung gegenüber bituminösen Ölen auf. Weiterhin ist eine gute Affinität der äußeren Schichten zu Antihaftmitteln gegeben, insbesondere, wenn die äußere Schicht, welche anti-haft zu beschichten ist, phenolische Antioxidantien enthält.

Eine gute Affinität zum Antihaftmittel ist äußerst vorteilhaft, wenn die Releasefolie wieder vom bituminösen Material entfernt wird. Die Releasefolie lässt sich in diesem Fall gut abtrennen, ohne dass Rückstände auf der bitumonösen Materialie zurückbleiben und ohne Schwierigkeiten bei der Abtrennung. "Gute Affinität" bedeutet, dass die Haftkraft wesentlich größer als die Peelkraft ist.

Vorzugsweise wird der Folienverbund durch Co-Extrusion gebildet. Ein weiterer Vorteil gegenüber bekannten Folienverbünden, wie denen mit PA ist dabei auch, dass der erfindungsgemäße Folienverbund einen überraschend höheren Weiterreißwiderstand in Maschinenrichtung der Folie aufweist. Dies ist insbesondere bei der Weiterverarbeitung essentiell. So liegt der Weiterreißwiderstand eines erfindungsgemäßen Folienverbundes (gemessen nach DIN 53363) in Maschinenrichtung mit 340 ± 40 N/mm um mindestens 60 N/mm bzw. um mindestens 25% höher als der Weiterreißwiderstand eines vergleichbaren Verbundes aus PP-Schichten (ebenfalls gemessen nach DIN 53363).

Ein weiterer Vorteil des erfindungsgemäßen Folienverbundes ist dessen verbesserte Recyclebarkeit.

Der oben beschriebene Folienverbund wird als Trägermaterial und/oder Releasefolie für bituminöse Materialien verwendet. Bei dieser Art der Verwendung ist es bevorzugt, wenn die Folienschicht der der bituminösen Masse zugewandten Seite zusätzlich ein Antihaftmittel enthält oder auf der der bituminösen Masse zugewandten Seite eine Antihaftmittelschicht aufweist. Bituminöse Materialien sind insbesondere selbstklebende ölhaltige Bitumendachbahnen.

Die Erfindung soll im Folgenden anhand von Zeichnungen erläutert werden. Es zeigen
Fig. 1: Einen Folienverbund mit mittlerer Schicht und äußeren Schichten
Fig. 2: Einen Folienverbund mit mittlerer Schicht und äußeren Schichten, sowie zusätzlicher Antihaftmittelschicht
Fig. 3: Einen Folienverbund mit mittlerer Schicht und äußeren Schichten, sowie zusätzlicher Antihaftmittelschicht, aufgebracht auf eine bituminöse Masse.

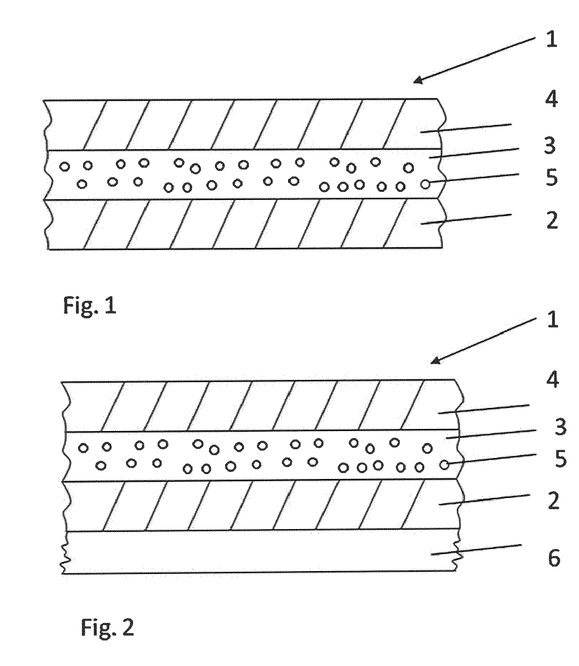

Fig. 1 zeigt einen Folienverbund 1 mit drei Folienschichten 2, 3 und 4. Die zwei äußeren Schichten 2 und 4 weisen jeweils mindestens ein Polyolefinpolymer (vorzugsweise ein Propylenpolymer) auf, welches gleich oder verschieden ist. Die mittlere Schicht 3 weist mindestens ein Polymer, welches kein Polyamid ist und zu den Polyolefinpolymeren der Schichten 2 und 4 zumindest teilverträglich ist und darin enthaltenen mindestens einen anorganischen Füllstoff 5 auf. Zur Vereinfachung ist dieser in Form von Kugeln dargestellt, welche annähernd gleichmäßig verteilt sind.

Fig. 2 zeigt den Folienverbund gemäß Fig. 1 mit einer zusätzlichen Antihaftmittelschicht 6.

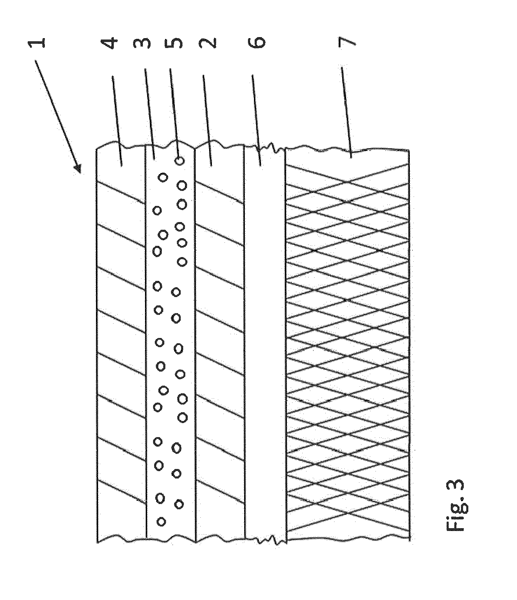

Fig. 3 zeigt einen Folienverbund gemäß Fig. 2 mit zusätzlicher Antihaftmittelschicht 6, welche auf einem bituminösen Materialien 7 aufgebracht ist.

### Bezugszeichen

- 1: Folienverbund
- 2: Äußere Schicht
- 3: Mittlere Schicht
- 4: Äußere Schicht
- 5: Anorganischer Füllstoff
- 6: Antihaftmittelschicht
- 7: Bituminöses Material

Nachfolgend soll die Erfindung anhand eines Beispiels im Detail erläutert werden, ohne sie darauf zu beschränken.

### Beispiel 1

Ein Folienverbund der nachstehend genannten Zusammensetzung wird mittels Coextrusion der Schichten 2, 3 und 4 gebildet. Die Gesamtdicke des Verbundes beträgt 50 µm.

### Schicht 2 (15.0 µm):

100 Masse-% heterophasisches Polypropylen-Copolymer, enthaltend phenolische Antioxidantien (BA 110 CF, Dichte 0,905 g/cm³ und MFI 0,8 g/10 min).
Verarbeitungstemperatur der Schicht 240 °C.

### Schicht 3 (20,0 µm):

70,0 Masse-% eines PE-LLDs mit C6-Seitenketten (Dowlex 5056)
25,0 Masse-% Talkumbatch
5,0 Masse-% eines Weiß-Batches.
Verarbeitungstemperatur der Schicht 195 °C.

### Schicht 4 (15,0 µm):

100,0 Masse-% eines heterophasischen Polypropylen-Copolymers, enthaltend phenolische Antioxidantien (BA 110 CF, Dichte 0,905 g/cm³ und MFI 0,8 g/10 min).
Verarbeitungstemperatur der Schicht 240 °C.

Der coextrudierte Folienverbund wird einseitig mit Silikon als Antihaftmittel beschichtet und als Trägermaterial bzw. Release-Folie für selbstklebende ölhaltige Bitumendachbahnen eingesetzt.

### Beispiel 2

Der Weiterreißwiderstand des Folienverbundes aus Beispiel 1 wurde gemäß DIN 53363 bestimmt. In Maschinenrichtung ergab sich der Weiterreißwiderstand zu 340 ± 40 N/mm, in Querrichtung zu 402 ± 50 N/mm.

Vergleichsweise wurde eine 7-Schicht-PP-Folie vermessen. Die Meßwerte gemäß DIN 53363 lagen in Maschinenrichtung bei 198 ± 36 N/mm und in Querrichtung bei 492 ± 65 N/mm.

## Patentansprüche

1. Folienverbund (1) mit wenigstens drei Folienschichten (2), (3) und (4), wobei die zwei äußeren Schichten (2) und (4) jeweils mindestens ein Polyolefinpolymer aufweisen, welches gleich oder verschieden ist, **dadurch gekennzeichnet, dass** die mittlere Schicht (3) mindestens ein Polymer, welches kein Polyamid ist und zu den Polyolefinpolymeren der Schichten (2) und (4) zumindest teilverträglich ist und darin enthaltenen mindestens einen anorganischen Füllstoff aufweist, welcher ausgewählt ist aus Talkum und Kreide sowie Mischungen von Talkum und Kreide.

2. Folienverbund (1) nach Anspruch 1, **dadurch gekennzeichnet, dass** die mittlere Schicht (3) den mindestens einen anorganischen Füllstoff zu 5 bis 90 Masse-% enthält.

3. Folienverbund (1) nach Anspruch 1 oder 2, **dadurch gekennzeichnet, dass** die mittlere Schicht (3) den mindestens einen anorganischen Füllstoff als Batch mit einem weiteren Polymer, welches kein Polyamid ist, als Träger enthält, wobei das Batch 5 bis 90 Masse-% anorganischen Füllstoff und 95 bis 10 Masse-% des weiteren Polymers aufweist und die mittlere Schicht (3) den Batch zu 5,5 bis 100 Masse-% enthält.

4. Folienverbund (1) nach einem der Ansprüche 1-3, **dadurch gekennzeichnet, dass** der mindestens eine anorganische Füllstoff eine mittlere Teilchengröße von 1-6 µm und/oder einen Top-cut von 1-12 µm aufweist.

5. Folienverbund (1) nach einem der Ansprüche 1-4, **dadurch gekennzeichnet, dass** das Polyolefinpolymer der Schichten (2) und (4), welches gleich oder verschieden ist, ein Polypropylen-homopolymer oder -copolymer ist.

6. Folienverbund (1) nach einem der Ansprüche 1-5, **dadurch gekennzeichnet, dass** das Polymer der mittleren Schicht (3) ein Polyethylenpolymer ist.

7. Folienverbund (1) nach einem der Ansprüche 1-6, **dadurch gekennzeichnet, dass** die Schichten (3) und/oder (4) bis zu 20 Masse-% zusätzliche Additive enthalten, welche gleich oder verschieden sind.

8. Folienverbund (1) nach einem der Ansprüche 1-7, **dadurch gekennzeichnet, dass** die Dicke der mittleren Schicht (3) 20-80 % der Gesamtdicke des Folienverbundes (1) ausmacht.

9. Folienverbund (1) nach einem der Ansprüche 1-7, **dadurch gekennzeichnet, dass** eine der Schichten (2) oder (4) zusätzlich ein Antihaftmittel enthält oder auf der nach außen gewandten Seite eine Antihaftmittelschicht (5) aufweist.

10. Verwendung eines Folienverbundes (1) gemäß einem der Ansprüche 1-9 als Trägermaterial und/oder Releasefolie für bituminöse Materialien (6).

11. Verwendung eines Folienverbundes (1) nach Anspruch 10 als Trägermaterial und/oder Releasefolie für bituminöse Materialien, **dadurch gekennzeichnet, dass** die Folienschicht (2) zusätzlich ein Antihaftmittel enthält oder auf der der bituminösen Masse (6) zugewandten Seite eine Antihaftmittelschicht (5) aufweist.
